(19) Europäisches Patentamt
European Patent Office
Office européen des brevets

(11) **EP 4 312 285 A1**

(12) **EUROPEAN PATENT APPLICATION**

(43) Date of publication:
**31.01.2024 Bulletin 2024/05**

(21) Application number: **23187684.8**

(22) Date of filing: **25.07.2023**

(51) International Patent Classification (IPC):
**H01M 4/133** (2010.01)   **H01M 4/1393** (2010.01)
**H01M 4/36** (2006.01)   **H01M 4/583** (2010.01)
**H01M 10/0525** (2010.01)   **H01M 4/02** (2006.01)

(52) Cooperative Patent Classification (CPC):
**H01M 4/133; H01M 4/1393; H01M 4/364;**
**H01M 4/583; H01M 10/0525;** H01M 2004/021;
H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.07.2022 KR 20220092581**

(71) Applicant: **SK On Co., Ltd.**
**Seoul 03161 (KR)**

(72) Inventor: **PARK, So Hyun**
**34124 Daejeon (KR)**

(74) Representative: **Stolmár & Partner**
**Patentanwälte PartG mbB**
**Blumenstraße 17**
**80331 München (DE)**

(54) **ANODE FOR SECONDARY BATTERY AND SECONDARY BATTERY INCLUDING THE SAME**

(57)    An anode for a lithium secondary battery includes an anode current collector, and an anode active material layer on the anode current collector. The anode active material layer includes an anode active material that includes assembly-type artificial graphite particles and single-type artificial graphite particles. An XRD orientation index defined as a ratio of peak intensities of a (004) plane and a (110) plane and represented as I(004)/I(110) by an XRD analysis measured from the anode active material layer is in a range from 6 to 13.

FIG. 1

EP 4 312 285 A1

**Description**

CROSS-REFERENCE TO RELATED APPLICATION AND CLAIM OF PRIORITY

This application claims priority to Korean Patent Application No. 10-2022-0092581 filed on July 26, 2022 in the Korean Intellectual Property Office (KIPO), the entire disclosure of which is incorporated by reference herein.

BACKGROUND

1. Field

The disclosure of this patent document relates to an anode for a secondary battery and a secondary battery including the same. More particularly, the present disclosure relates to an anode for a secondary battery including different types of particles and a secondary battery including the same.

2. Description of the Related Art

A secondary battery which can be charged and discharged repeatedly has been widely employed as a power source for mobile electronic devices such as camcorders, mobile phones, laptop computers, etc., as information and display technologies have developed. Recently, a battery pack including the secondary battery has been developed and applied as a power source for eco-friendly vehicles such as electric automobiles.

Examples of a secondary battery include, e.g., a lithium secondary battery, a nickelcadmium battery, a nickel-hydrogen battery, etc. The lithium secondary battery has been developed and applied due to its high operational voltage and energy density per unit weight, its high charging rate, its compact dimension, etc.

The lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

In the lithium secondary battery , graphite-based active material particles may be used as an anode active material. For example, granulated artificial graphite particles may be used to improve chemical stability and capacity.

SUMMARY

According to one aspect of the present disclosure, there is provided an anode for a secondary battery having improved stability, capacity and power compared to typical secondary batteries.

In one embodiment of the present disclosure, there is provided an anode for a lithium secondary battery which includes an anode current collector and an anode active material layer on the anode current collector. The anode active material layer includes an anode active material that includes assembly-type artificial graphite particles and single-type artificial graphite particles. An X-ray diffraction (XRD) orientation index defined as a ratio of x-ray diffraction peak intensities of a (004) plane and a (110) plane and represented as I(004)/I(110) by an XRD analysis measured from the anode active material layer is in a range from 6 to 13.

In some embodiments, the XRD orientation index of the anode active material layer may be in a range from 6 to 11.

In some embodiments, a pore resistance of the anode may be in a range from 16 S2 to 26 $\Omega$.

In some embodiments, a pore resistance of the anode may be in a range from 16 S2 to 21 $\Omega$.

In some embodiments, a content of the assembly-type artificial graphite particles may be in a range from 60 wt% to 90 wt% based on a total weight of the assembly-type artificial graphite particles and the single-type artificial graphite particles.

In some embodiments, a difference between a pellet density and a tap density of the anode active material may be 1 g / cc or less. The pellet density may be calculated by putting 1 g sample of the anode active material sample into a cylindrical pelletizer having a diameter of 13 mm, applying a pressure of 8 kN for 10 seconds, and measuring a height difference in height of the pelletizer. The tap density may be measured after 3,000 taps with a stroke length of 10 mm by filling 10 g sample of the anode active material sample in a 25 ml measurement cylinder.

In some embodiments, the anode active material may have the pellet density from 1.5 g/cc to 2 g/cc and the tap density from 0.9 g/cc to 1.3 g/cc.

In some embodiments, the difference between the pellet density and the tap density of the anode active material may be in a range from 0.5 g/cc to 1 g/cc.

In some embodiments, an average particle diameter of the assembly-type artificial graphite particles is larger than an average particle diameter of the single-type artificial graphite particles.

In some embodiments, the assembly-type artificial graphite particles may be prepared from isotropic coke.

In some embodiments, the single-type artificial graphite particles may be prepared from needle coke.

In one embodiment of the present disclosure there is provided a secondary battery which includes the anode for a secondary battery according to the above-described embodiments, and a cathode facing the anode.

An anode active material according to various embodiments may include an assembly-type artificial graphite particles and single-type artificial graphite particles. Particle cracks in an anode active material layer may be prevented by mixing single-type artificial graphite particles while improving a capacity by the assembly-type artificial graphite particles. Additionally, an electrode density or an active material density of the anode active material layer may be increased by mixing different types of particles. Thus, a power from the cathode can be increased.

In various embodiments, an XRD orientation index of the anode active material may be maintained within a specific range so that an isotropy of the graphite particles may be improved. Accordingly, a lithium ion path in the anode active material may be shortened to additionally enhance an anode power.

In some embodiments, pore resistance and density properties of the anode active material layer or the anode active material may be adjusted so that stability and capacity retention properties of the secondary battery may be further improved.

BRIEF DESCRIPTION OF THE DRAWINGS

   FIG. 1 is a schematic cross-sectional view illustrating an anode active material for a lithium secondary battery in accordance with various embodiments.
   FIG. 2 is a schematic plan view illustrating a secondary battery in accordance with other embodiments.
   FIG. 3 is a schematic cross-sectional view illustrating a secondary battery in accordance with further embodiments.

DETAILED DESCRIPTION OF THE EMBODIMENTS

The present invention recognized that cracks may occur on the inside of the granulated artificial graphite particles during a press process for manufacturing an anode, and a sufficient electrode density may not be obtained due to the cracking. Furthermore, the present invention recognized that power degradation may occur due to particle orientation properties, etc. The present invention addresses these concerns by providing an anode material less suspect to cracking.

According to various embodiments of the present disclosure, an anode for a secondary battery including an assembly-type artificial graphite particle and a single-type artificial graphite particle, and a secondary battery including the anode are provided.

Hereinafter, various embodiments of the present disclosure will be described in detail with reference to the accompanying drawings. However, those skilled in the art will appreciate that the various embodiments described with reference to the accompanying drawings are provided to further understand the scope of the present invention and do not limit subject matters to be protected.

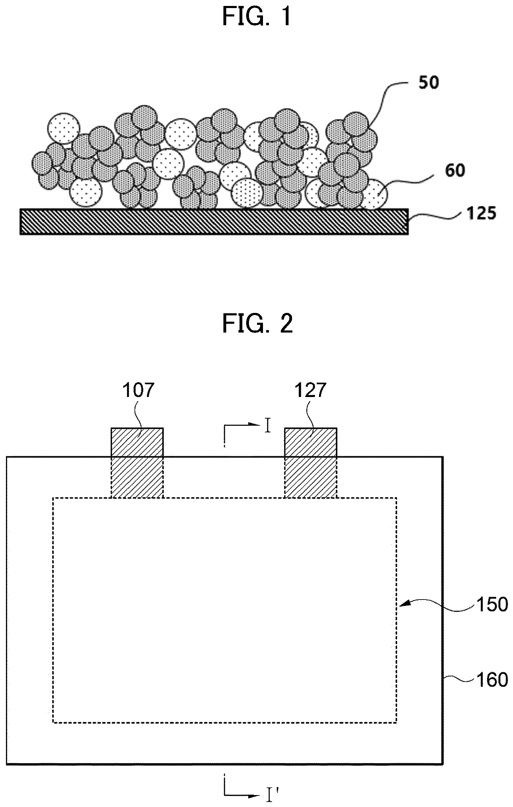

FIG. 1 is a schematic cross-sectional view illustrating an anode active material for a lithium secondary battery in accordance with various embodiments. For example, FIG. 1 is a cross-sectional view schematically illustrating a shape in which anode active materials for a secondary battery are collected on an anode electrode current collector 125.

For convenience of descriptions, some artificial graphite particles are shown in FIG. 1, and the number and the assembly form of sub-particles (e.g., primary particles) included in assembly-type particles are not limited as shown in FIG. 1.

Further, only the anode active material is shown on the anode current collector 125 in FIG. 1, and as will be described later, the anode active material may be formed/bonded together with a binder on the anode current collector 125 to form an anode active material layer and an anode.

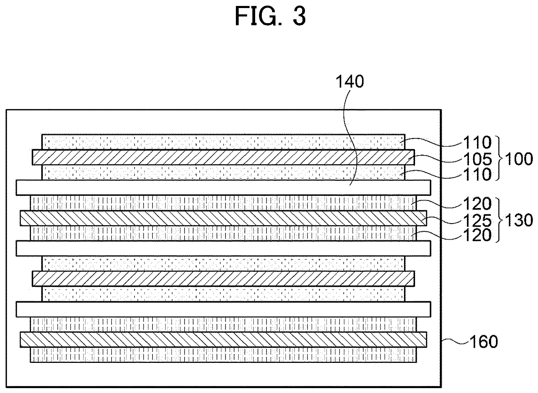

Referring to FIG. 1, an anode for a secondary battery includes an anode active material layer 120 (see FIG. 3) formed on the anode current collector 125, and the anode active material layer 120 includes an anode active material.

According to embodiments of the present disclosure, the anode active material includes an assembly-type artificial graphite particle 50 (i.e., defined herein as a granulated artificial graphite particle comprising an aggregation of multiple graphite primary particles or sub-particles) and a single-type artificial graphite particle 60 (i.e., defined herein as a unitary type artificial graphite particle including only one artificial graphite particle). The anode active material may include a plurality of the assembly-type artificial graphite particles 50 and a plurality of the single-type artificial graphite particles 60.

The assembly-type artificial graphite particles 50 may have a form in which two or more sub-particles (primary particles) are substantially aggregated into one independent particle. For example, the assembly-type artificial graphite particle 50 may be a plurality of the primary particles that have been aggregated.

More specifically, each of the assembly-type artificial graphite particles 50 may include, e.g., 5 or more, 10 or more, 20 or more of the sub-particles or the primary particles aggregated together.

Each of the single-type artificial graphite particles 60 may be comprised of only one single particle shape. In various embodiments, the single-type artificial graphite particle 60 may have a single body shape which is not a shape formed by an agglomerate or an aggregate of the sub-particles or the primary particles.

For example, an agglomerate or an assembly of a plurality of the sub-particles (e.g., 10 or more) may be excluded from the single-type artificial graphite particle 60. However, the single-type artificial graphite particles 60 may also be adjacently adhered to each other in a press process for forming the anode. Thus, a monolithic form in which some single-type artificial graphite particles 60 (e.g., less than 10, 5 or less, etc.) are adjacently attached is not excluded from the single-type artificial graphite particle 60.

As described above, the artificial graphite particles are employed as the anode active material, so that overall chemical and mechanical stability and life-span properties of the anode may be improved.

While natural graphite may provide a relatively high capacity, and may have a large surface area due to irregular surface properties, a side reaction with an electrolyte and chemical instability may be caused which can deteriorate life-span properties of the battery.

Nevertheless, in various embodiments of the present disclosure, artificial graphite particles may be used as a main active material of the anode to improve repeated charge/discharge cycles and life-span stability of the battery. Additionally, capacity properties may be improved by using the inventive assembly-type artificial graphite particles 50.

In various embodiments, the single-type artificial graphite particle 60 may be added to improve mechanical stability of the anode active material layer. In one example, the single-type artificial graphite particle 60 may have a greater hardness than that of the assembly-type artificial graphite particle 50.

Thus, according to one embodiment, gas generation and side reactions due to particle cracks of the anode active material may be suppressed in the press process for manufacturing the anode. Additionally, the single-type artificial graphite particles 60 may be inserted into gaps between the assembly-type artificial graphite particles 50 to improve an overall electrode density of the anode active material layer.

Thus, power properties from the anode may be improved and expansion of the anode due to repeated charging and discharging may be suppressed.

As described above, a mixture of the assembly-type artificial graphite particles 50 and the single-type artificial graphite particles 60 may be used to enhance a packing density of the anode active material. In various embodiments, a difference between a pellet density and a tap density (hereinafter, may be abbreviated as a density difference) of the anode active material may be 1 g/cc or less.

In one embodiment of the present disclosure, when the inventive anode material of the present disclosure exhibits the density difference ranges (detailed below) between a pellet density and a tap density, particle cracks in the press process (of applying and subsequently pressing a slurry of the above-noted mixture of the assembly-type artificial graphite particles 50 and the single-type artificial graphite particles 60 in making a secondary battery) may be prevented, and expansion of the anode due to voids in the anode active material layer may be effectively suppressed. In some embodiments, the density difference may range from 0.95 g/cc or less, 0.9 g/cc or less, or 0.85 g/cc or less, and may be greater than zero, 0.1 g/cc or more, or 0.5 g/cc or more. In some embodiments, the density difference may range from 0.5 g/cc to 1 g/cc, from 0.5 g/cc to 0.95 g/cc, from 0.6 g/cc to 0.95 g/cc, or from 0.6 g/cc to 0.9 g/cc. When an anode active material comprising the above noted mixture of the assembly-type artificial graphite particles 50 and the single-type artificial graphite particles 60 tests within the above ranges, the mechanical stability and life-span properties of the anode formed with the above-noted mixture of the assembly-type artificial graphite particles 50 and the single-type artificial graphite particles 60 may improve without excessively degrading the anode capacity.

In some embodiments, a pellet density of the anode active material may range from 1.5 g/cc to 2 g/cc, from 1.6 g/cc to 2 g/cc, or from 1.7 g/cc to 2 g/cc. The tap density of the anode active material may range from 0.9 g/cc to 1.3 g/cc, from 0.9 g/cc to 1.2 g/cc, or from 0.95 g/cc to 1.1 g/cc.

In one example, a pellet density can be measured by applying a set pressure for a set time to a set diameter sample of the anode active material in a pelletizer. A height of the sample after pressing in the pelletizer is measured for calculation of the pellet density. The pellet density is a density measured after putting a predetermined mass of the anode active material into a cylinder and applying a pressure of 8 kN. In another example, a tap density is a density measured after filling a cylinder with the anode active material and applying a predetermined number of tapping. A tap density can be a density measured after completely filling a powder density gage with the anode active material and applying a set number of tappings (e.g., 3000 times) with fixed stroke length. The density of the sample after tapping is measured as the tap density.

In other embodiments, an average particle diameter of the assembly-type artificial graphite particles 50 may be larger than that of the single-type artificial graphite particles 60. Accordingly, the single-type artificial graphite particles 60 may be inserted into the gaps between the assembly-type artificial graphite particles 50 to increase the electrode density.

In one embodiment, the average particle diameter (50% average particle diameter (D50) in a volume cumulative particle size distribution) of the assembly-type artificial graphite particles 50 may range from 13 to 20 $\mu$m or 14 to 20 $\mu$m. The average particle diameter (D50) of the single-type artificial graphite particles 60 may range from 5 $\mu$m to 10 $\mu$m.

In some embodiments, a content of the assembly-type artificial graphite particles 50 based on a total weight of the assembly-type artificial graphite particles 50 and the single-type artificial graphite particles 60 may be 50 weight percent (wt%) or more. In one example, the weight content of the assembly-type artificial graphite particles 50 may range from 50 wt% to 90 wt%, from 60 wt% to 90 wt%, or from 60 wt% to 80 wt%.

Within the above ranges, the capacity increase from the assembly-type artificial graphite particles 50 and the electrode density improvement from the single-type artificial graphite particle 60 may be realized.

In some embodiments, the assembly-type graphite particles 50 may be formed from isotropic cokes. Accordingly, the assembly-type artificial graphite particles 50 may have a low degree of orientation, and a length of a lithium ion path within the particles may be reduced, and the number of lithium insertion sites may be increased.

Accordingly, the power properties of the anode active material layer may be increased. Further, when a pressure is applied to the assembly-type artificial graphite particles 50, the particles may be prevented from being deformed or damaged along a specific orientation.

In some embodiments, the single-type artificial graphite particles 60 may be formed from needle cokes. Accordingly, the single-type artificial graphite particles 60 may be obtained through pulverization and graphitization of the needle cokes. Additionally, an electrical conductivity of the single-type artificial graphite particle 60 formed from needle cokes may be increased to further enhance the power.

FIGS. 2 and 3 are a schematic plan view and a schematic cross-sectional view, respectively, illustrating a secondary battery according to various embodiments. For example, FIG. 3 is a cross-sectional view taken along a line I-I' shown in FIG. 2 in a thickness direction of the secondary battery.

Hereinafter, descriptions of an anode for a secondary battery according to embodiments of the present disclosure will also be described with reference to FIG. 3.

Referring to FIGS. 2 and 3, the secondary battery may be provided as a lithium secondary battery. In various embodiments, the secondary battery may include an electrode assembly 150 and a case 160 accommodating the electrode assembly 150. The electrode assembly 150 may include an anode 100, a cathode 130 and a separation layer 140.

The cathode 100 may include a cathode current collector 105 and a cathode active material layer 110 formed on at least one surface of the cathode current collector 105. In various embodiments, the cathode active material layer 110 may be formed on both surfaces (e.g., upper and lower surfaces) of the cathode current collector 105. For example, the cathode active material layer 110 may be coated on each of the upper and lower surfaces of the cathode current collector 105, and may be directly coated on the surface of the cathode current collector 105.

The cathode current collector 105 may include, e.g., stainless steel, nickel, aluminum, titanium, copper, or an alloy thereof, and may include, e.g., aluminum or an aluminum alloy.

The cathode active material layer 110 may include a lithium metal oxide as a cathode active material. In various embodiments, the cathode active material may include a lithium (Li)-nickel (Ni)-based oxide.

In some embodiments, the lithium metal oxide included in the cathode active material layer 110 may be represented by Chemical Formula 1 below.

[Chemical Formula 1]     $Li_{1+a}Ni_{1-(x+y)}Co_xM_yO_2$

In Chemical Formula 1, $-0.05 \leq a \leq 0.15$, $0.01 \leq x \leq 0.2$, $0 \leq y \leq 0.2$ and M may include at least one or more elements selected from the group consisting of Mg, Sr, Ba, B, Al, Si, Mn, Ti, Zr and W. In another embodiment, $0.01 \leq x \leq 0.20$ and $0.01 \leq y \leq 0.15$.

In some embodiments, in Chemical Formula 1, M may include manganese (Mn). In this case, a nickel-cobalt-manganese (NCM)-based lithium oxide may be used as the cathode active material.

For example, nickel (Ni) may serve as a metal related to a capacity of a lithium secondary battery. As a content of Ni increases, the capacity of the lithium secondary battery may also increase. However, when the nickel content is excessively increased, the life-span may be degraded, and the mechanical and electrical stability may be lowered.

In another example, cobalt (Co) may be used as a metal associated with a conductivity or resistance and a power of the lithium secondary battery. In one embodiment, M may include manganese (Mn), and Mn may be provided as a metal related to improving the mechanical and electrical stability of the lithium secondary battery.

From the above-described interaction between nickel, cobalt and manganese, the capacity, the power, low resistance properties and life-span stability of the cathode active material layer 110 may be improved.

In one example, a slurry may be prepared by mixing and stirring the cathode active material with a binder, a conductive material and/or a dispersive agent in a solvent. The slurry may be coated on the cathode current collector 105, dried, and pressed to form the cathode active material layer 110.

The binder may include an organic based binder such as for example a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as for example styrene-butadiene rubber (SBR) that may be used with a thickener such as carboxymethyl cellulose (CMC).

In one example, a PVDF-based binder may be used as a cathode binder. In this case, as compared to other binders, an amount of the binder for forming the cathode active material layer 110 may be reduced, so that an amount of the cathode active material may be relatively increased. Thus, the capacity and power of the lithium secondary battery may be further improved.

A conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

In some embodiments, an electrode density of the cathode 100 may be in a range from 3.0 g/cc to 3.9 g/cc, or from 3.2 g/cc to 3.8 g/cc.

The anode 130 may include an anode current collector 125 and an anode active material layer 120 formed on at least one surface of the anode current collector 125. In various embodiments, the anode active material layer 120 may be formed on both surfaces (e.g., upper and lower surfaces) of the anode current collector 125. The anode active material layer 120 may be coated on each of the upper and lower surfaces of the anode current collector 125. In one example, the anode active material layer 120 may directly contact the surface of the anode current collector 125.

The anode current collector 125 may include for example gold, stainless steel, nickel, aluminum, titanium, copper or an alloy thereof, and may include, e.g., copper or a copper alloy.

In various embodiments, the anode active material layer 120 may include the anode active material according to the above-described embodiments. For example, the anode active material may be included in an amount ranging from 80 wt% to 99 wt% based on a total weight of the anode active material layer 120. In some embodiments, the anode active material may be included in an amount from 90 wt% to 98 wt% based on the total weight of the anode active material layer 120.

As described with reference to FIG. 1, the anode active material may include the assembly-type artificial graphite particles 50 and the single-type artificial graphite particles 60. In some embodiments, the anode active material may further include natural graphite particles and/or a silicon-based active material (e.g., SiOx(0<x<2)) to increase capacity.

In this case, a content of the assembly-type artificial graphite particles 50 and the single-type artificial graphite particles 60 may be 80 wt% or more, 85 wt% or more, 90 wt% or more, 95 wt% or more, or 98 wt% or more, based on the total weight of the anode active material.

In one embodiment, the anode active material may substantially consist of the assembly-type artificial graphite particles 50 and the single-type artificial graphite particles 60.

In one example, an anode slurry may be prepared by mixing and stirring the anode active material with a binder, a conductive material and/or the dispersive agent in a solvent. The anode slurry may be coated on the anode current collector 125, and then dried, and pressed (rolled) to form the anode active material layer 120.

Materials substantially the same as or similar to those used for forming the cathode 100 may be used as the binder and the conductive material for the anode 130. In some embodiments, the binder for forming the anode 130 may include, e.g., styrene-butadiene rubber (SBR) or an acrylic binder for compatibility with the graphite-based active material, and a thickener such as carboxymethyl cellulose (CMC) may also be used.

In various embodiments, a weight density of the anode active material layer 120 may be in a range from 1.4 g/cc to 2.0 g/cc.

In various embodiments, an XRD orientation index measured from the anode active material layer 120 including the anode active material as described above may be in a range from 6 to 13.

The term "XRD orientation index" used herein is defined as a ratio of 1(004) to I(110), that is (I(004)/I(110)) determined by an X-ray diffraction (XRD) analysis.

I(110) and I(004) are the diffraction line peak intensities or maximum heights of a (110) plane and a (004) plane, respectively, determined by XRD analysis measured on the surface of the anode active material layer 120.

The XRD orientation index may reflect a crystallinity or an orientation of the anode active material. For example, if the XRD orientation index is excessively high, the orientation of the anode active material increases, and the active surface is severely exposed, thereby deteriorating the life-span properties of the anode or the lithium secondary battery. If the XRD orientation index is excessively small, crystallinity may deteriorate the capacity of the anode active material.

As described above, the XRD orientation index of the anode active material layer 120 may be adjusted to a range from 6 to 13 by using both the assembly-type artificial graphite particles 50 and the single-type artificial graphite particles 60. Accordingly, appropriate capacity properties may be maintained while maintaining a proper isotropy (XRD orientation index) to increase the power from the anode 130.

In some embodiments, the assembly-type artificial graphite particles 50 formed from isotropic cokes may be used to effectively implement a structure providing high hardness and high power.

In another embodiment, the XRD orientation index of the anode active material layer 120 may be in a range from 6 to 12, from 6 to 11, or from 6 to 10.

In various embodiments, a pore resistance (Rp) of the anode 130 or the anode active material layer 120 may be in a range from 16 S2 to 26 Ω. Within the above range, sufficient hardness and electrode density of the anode active material layer 120 may be implemented without excessively degrading both the conductivity and rapid charging properties of the anode 130. Additionally, sufficient life-span stability of the anode 130 or the secondary battery may be implemented.

In some embodiments, a pore resistance (Rp) of the anode 130 or the anode active material layer 120 may be in a range from 16 S2 to 22 S2, from 16 S2 to 21 S2, or from 16 S2 to 20 Ω.

The pore resistance may represent or correspond to the resistance required for an electrolyte solution to propagate into the anode. In one example, the electrolyte solution containing lithium ions may be injected into a symmetric cell to which the anode for a lithium secondary battery is equally applied as a working electrode and a counter electrode, and then an electrochemical impedance spectroscopy may be performed to obtain a resistance defined as the pore resistance.

Impedance measurement data for each frequency measured by impedance spectroscopy may be obtained through an impedance equation expressed as Equations 1 and 2 below.

[Equation 1]

$$Z_{faradaic} = \sqrt{\frac{R_{ion,L} \cdot R_{ct,A}}{(1 + j\omega R_{ct,A} \cdot C_{dl,A}) \cdot 2\pi r}} \coth \sqrt{\frac{R_{ion,L} \cdot (1 + j\omega R_{ct,A} \cdot C_{dl,A}) \cdot 2\pi r}{R_{ct,A}}} L$$

Equation 1 using a Transmission Line Model (TLM) theory is an equation derived from an impedance theory for cylindrical pores which is a resistance theory assuming that all pores are cylindrical.

Since the term j is an imaginary number in Equation 1, Equation 2 below can be obtained by removing the term j by setting a value of $\omega$ to 0.

[Equation 2]

$$Z'_{faradaic,\omega \to 0} = \frac{R_{ion}}{3} + R_{ct}$$

In Equation 2, $Z'_{faradaic,\omega \to o}$ is a total resistance $R_{ion}$ is a pore resistance, and $R_{ct}$ is a charge transfer resistance.

If the symmetric cell in which the anode is applied equally as the working electrode and the counter electrode is used, electron movement does not occur, and the Rct value becomes 0. Thus, three (3) times the value of $Z'_{faradaic,\omega \to o}$ can be derived as the pore resistance ($R_{ion}$).

The ranges of the XRD orientation index and the pore resistance according to various embodiments may be implemented or adjusted using for example a composition and a structure of the anode active material, a content of the anode active material in the anode active material layer 120, a pressure when forming the anode active material layer 120, etc.

In some embodiments, an area and/or a volume of the anode 130 (e.g., a contact area with the separation layer 140) may be greater than that of the cathode 100. Thus, lithium ions generated from the cathode 100 may be more easily transferred to the anode 130 without a loss by, e.g., precipitation or sedimentation, and can enhance the power and the capacity of the battery.

The separation layer 140 may be interposed between the cathode 100 and the anode 130. The separation layer 140 may include a porous polymer film prepared from, e.g., a polyolefin-based polymer such as for example an ethylene homopolymer, a propylene homopolymer, an ethylene/butene copolymer, an ethylene/hexene copolymer, an ethylene/methacrylate copolymer, or the like. The separation layer 140 may also include a non-woven fabric formed for example from a glass fiber with a high melting point, a polyethylene terephthalate fiber, etc.

The separation layer 140 may extend between the cathode 100 and the anode 130 in a width direction of the secondary battery, and may be folded and wound along the thickness direction of the secondary battery. Accordingly, a plurality of the anodes 100 and the cathodes 130 may be stacked in the thickness direction using the separation layer 140.

In various embodiments, an electrode cell may be defined by the cathode 100, the anode 130 and the separation layer 140, and a plurality of the electrode cells may be stacked to form the electrode assembly 150 that may have e.g., a jelly roll shape. In one example, the electrode assembly 150 may be formed by winding, stacking or folding of the separation layer 140.

The electrode assembly 150 may be accommodated together with an electrolyte in a case 160. The case 160 may include, e.g., a pouch, a can, etc.

In various embodiments, a non-aqueous electrolyte may be used as the electrolyte.

In one embodiment, the non-aqueous electrolyte may include a lithium salt and an organic solvent. The lithium salt may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, an electrode tab (a cathode tab and an anode tab) may protrude from each of the cathode current collector 105 and the anode current collector 125 to extend to one end of the case 160. The electrode tabs may be welded together with the one end of the case 160 to be connected to an electrode lead (a cathode lead 107 and an anode lead 127) exposed at an outside of the case 160.

FIG. 2 illustrates that the cathode lead 107 and the anode lead 127 may be formed at the same side of the secondary battery or the case 160, but the cathode lead 107 and the anode lead 127 may be formed at opposite sides of the case 160.

For example, the cathode lead 107 may be formed at one side of the case 160 and the anode lead 127 may be formed at the other side of the case 160.

The lithium secondary battery may be fabricated into a cylindrical shape using a can, a prismatic shape, a pouch shape, a coin shape, etc.

Hereinafter, the disclosed embodiments given below more concretely describe the present invention. However, the following examples are only given for illustrating the present invention and those skilled in the related art will understand that various alterations and modifications are possible within the scope of the present invention.

Preparation Example 1: Preparation of assembly-type artificial graphite particle (particle A)

Isotropic coke was pulverized, and then the obtained powder was heat-treated at 3000 °C for 20 hours to prepare primary artificial graphite particles having an average particle diameter (D50) of 7.5 $\mu$m.

The primary artificial graphite particles and pitch (a high carbon content material) were mixed by a weight ratio of 90:10, and then heat treatment was performed at 800 °C for 10 hours to prepare secondary particles in which the primary particles were assembled. An average particle diameter (D50) of the secondary particles was 16 $\mu$m. Thereafter, the powder was heat-treated at 3000 °C to prepare artificial graphite secondary particles (Example 1).

In the above-described process, assembly-type artificial graphite particles having different average particle diameters were manufactured as shown in Table 1 by changing a degree of pulverization and a temperature of the heat treatment temperature for forming the primary particles.

Preparation Example 2: Preparation of assembly-type artificial graphite particles (Particle B)

Artificial graphite secondary particles were prepared by the same method as that in Preparation Example 1, except that needle coke was used as a raw material for preparing the primary particles.

Preparation Example 3: single-type artificial graphite particles (Particle C)

Single-type high-hardness crushed artificial graphite particles having average particle diameters shown in Table 1 and were prepared from needle coke.

Measurement of pellet density

As shown in Table 1, anode active materials for each of Examples and Comparative Examples including the assembly-type artificial graphite particles and the single-type artificial graphite particles were prepared.

1 g of each of the anode active materials of Examples and Comparative Examples was filled in a cylindrical mold (pelletizer) having a diameter of 13 mm, a pressure of 8 kN was applied for 10 seconds, and then a height of the pelletizer was measured. A density of the pellet was calculated using a height difference from an initial empty pelletizer.

Measurement of tap density

10 g of the anode active material was filled in a 25 ml measurement cylinder. The measurement cylinder was fixed to tap equipment, taps were performed with a stroke length of 10 mm by 3000 times, and then a tap density (a weight density of the tapped material) was measured.

A difference between the measured pellet density and tap density was also listed in Table 1.

[Table 1]

| | anode active material (artificial graphite particle) | wt% (diameter: μm) | pellet density (g/cc) | tap density (g/cc) | pellet density - tap density (g/cc) |
|---|---|---|---|---|---|
| Example 1 | assembly-type (particle A) | 70 (18) | 1.92 | 1.1 | 0.82 |
| | single-type (particle C) | 30 (10) | | | |
| Example 2 | assembly-type (particle A) | 70 (16) | 1.72 | 1.12 | 0.6 |
| | single-type (particle C) | 30 (8) | | | |
| Example 3 | assembly-type (particle A) | 60 (16) | 1.88 | 0.98 | 0.9 |
| | single-type (particle C) | 40 (8) | | | |
| Example 4 | assembly-type (particle A) | 60 (18) | 1.95 | 1.01 | 0.94 |
| | single-type (particle C) | 40 (10) | | | |
| Example 5 | assembly-type (particle A) | 70 (20) | 1.98 | 1.05 | 0.93 |
| | single-type (particle C) | 30 (11) | | | |
| Example 6 | assembly-type (particle A) | 70 (14) | 1.79 | 1.11 | 0.68 |
| | single-type (particle C) | 30 (10) | | | |
| Comparative Example 1 | assembly-type (particle B) | 70 (18) | 2.09 | 0.97 | 1.12 |
| | single-type (particle C) | 30 (10) | | | |
| Comparative Example 2 | assembly-type (particle B) | 70 (16) | 2.1 | 1.02 | 1.08 |
| | single-type (particle C) | 30 (8) | | | |
| Comparative Example 3 | assembly-type (particle B) | 80 (16) | 2.13 | 0.98 | 1.15 |
| | single-type (particle C) | 20 (8) | | | |
| Comparative Example 4 | assembly-type (particle A) | 100 (18) | 1.91 | 0.84 | 1.07 |

Fabrication of Secondary Battery

93 wt% of the anode active material, 5 wt% of TIMCAL TIMREX® KS6L (a crystalline graphite flake type conductive material) as a conductive material, 1 wt% of styrene-butadiene rubber (SBR) as a binder and 1 wt% of carboxymethyl cellulose (CMC) as a thickener were mixed to form an anode slurry. The anode slurry was coated on a copper substrate, and then dried and pressed to from an anode.

$Li[Ni_{0.6}Co_{0.2}Mn_{0.2}]O_2$ as a cathode active material, carbon black as a conductive material and polyvinylidene fluoride (PVdF) as a binder were mixed in a weight ratio of 96.5:2:1.5 to form a slurry. The slurry was uniformly coated on an aluminum foil having a thickness of 12 μm, and vacuum dried at 130 °C to prepare a cathode for a lithium secondary battery.

The cathode and the anode prepared as described above were each formed into a predetermined size, and stacked with a separator (polyethylene, thickness: 25 $\mu$m) interposed between the cathode and the anode to form an electrode cell, and each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated with the electrolyte for 12 hours or more.

The electrolyte was prepared by forming 1M LiPF$_6$ solution in a mixed solvent of ethylene carbonate (EC)/ethyl methyl carbonate (EMC)/diethyl carbonate (DEC) (25/45/30; volume ratio), and then adding 1 wt% of vinylene carbonate (VC), 0.5 wt% of 1,3-propensultone (PRS) and 0.5 wt% of lithium bis(oxalato)borate (LiBOB).

The secondary battery prepared as described above was pre-charged for 36 minutes at a current (5A) corresponding to 0.25C. Degasing was performed after 1 hour, and aging was performed for more than 24 hours, followed by a formation charging/discharging (e,g., a charging condition at a constant current-constant voltage CC-CV of 0.2C 4.2V 0.05C CUT-OFF, discharging condition CC 0.2C 2.5V CUT-OFF).

Measurement orientation index

An XRD orientation index (I(004)/I(110)) was measured from the anode active material layer included in the anode of the secondary battery according to each of Examples and Comparative Examples.

Specific XRD analysis equipment/conditions are shown in Table 2 below.

[Table 2]

| XRD(X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

Measurement of Pore Resistance

The anode of each of Examples and Comparative Examples was equally applied to a working electrode and a counter electrode, and a polyethylene separator was interposed between the working electrode and the counter electrode to prepare an electrode assembly. An electrolyte solution in which 1M LiPF$_6$ was dissolved in a solvent in which ethylene carbonate (EC) and diethyl carbonate (DEC) were mixed in a volume ratio of 1:4 was injected into the electrode assembly to prepare a symmetric cell.

An impedance spectroscopy was performed by irradiating the fabricated symmetric coin cell in a frequency range from 500 KHz to 100 mHz. The progress results were expressed as a Nyquist plot, and a pore resistance was derived from a data analysis using Equation 1 and Equation 2 as described above.

Measurement of Capacity Retention

Charge (CC-CV 2.0 C 4.2V 0.05C CUT-OFF) and discharge (CC 1.0C 2.7V CUT-OFF) was repeated 30 times in a chamber of 25 °C for the lithium secondary battery prepared using the anode active material as described above. A capacity retention was calculated as a percentage of a discharge capacity at the 30th cycle to a discharge capacity at the first cycle.

The results are shown in Table 3 below.

[Table 3]

|  | XRD orientation index (I(004)/I(110)) | pore resistance (Ohm) | capacity retention (%) |
|---|---|---|---|
| Example 1 | 7.5 | 18.6 | 92 |
| Example 2 | 6.2 | 16.7 | 93 |
| Example 3 | 11.1 | 23.5 | 88 |
| Example 4 | 12.3 | 24.1 | 87 |
| Example 5 | 12.9 | 25.7 | 85 |
| Example 6 | 9.8 | 21.1 | 90 |
| Comparative Example 1 | 17.2 | 30.2 | 77 |
| Comparative Example 2 | 16.5 | 29 | 81 |
| Comparative Example 3 | 13.8 | 26.7 | 83 |
| Comparative Example 4 | 12.8 | 28 | 80 |

Referring to Table 3, both the assembly-type artificial graphite particle and the single-type artificial graphite particles were used to enhance an electrode hardness and an electrode density, and thus stable capacity retentions were achieved.

Further, the anode active material was designed within the range of the XRD orientation index as described above, isotropic properties were enhanced and more stable capacity and lifespan properties were achieved.

**Claims**

1.  An anode for a lithium secondary battery, comprising:

    an anode current collector 125; and
    an anode active material layer on the anode current collector 125, the anode active material layer including an anode active material that includes assembly-type artificial graphite particles 50 and single-type artificial graphite particles 60,
    wherein an x-ray diffraction (XRD) orientation index defined as a ratio of x-ray diffraction peak intensities of a (004) plane and a (110) plane and represented as I(004)/I(110) by an XRD analysis measured from the anode active material layer is in a range from 6 to 13.

2.  The anode for a secondary battery according to claim 1, wherein the XRD orientation index of the anode active material layer is in a range from 6 to 11.

3.  The anode for a secondary battery according to claims 1 or 2, wherein a pore resistance of the anode is in a range from 16 S2 to 26 S2.

4.  The anode for a secondary battery according to one of claims 1 to 3, wherein a pore resistance of the anode is in a range from 16 S2 to 21 S2.

5.  The anode for a secondary battery according to one of claims 1 to 4, wherein a content of the assembly-type artificial graphite particles 50 is in a range from 60 wt% to 90 wt% based on a total weight of the assembly-type artificial graphite particles and the single-type artificial graphite particles.

6.  The anode for a secondary battery according to one of claims 1 to 5, wherein a difference between a pellet density and a tap density of the anode active material is 1 g / cc or less,

    wherein the pellet density is calculated by putting 1 g sample of the anode active material sample into a cylindrical pelletizer having a diameter of 13 mm, applying a pressure of 8 kN for 10 seconds, and measuring a difference in heights of the sample in the pelletizer before and after pressurizing, and
    wherein the tap density is measured after 3,000 taps with a stroke length of 10 mm by filling 10 g sample of the anode active material sample in a 25 ml measurement cylinder.

7. The anode for a secondary battery according to claim 6, wherein the anode active material has the pellet density ranging from 1.5 g/cc to 2 g/cc and the tap density ranging from 0.9 g/cc to 1.3 g/cc.

8. The anode for a secondary battery according to claims 6 or 7, wherein the difference between the pellet density and the tap density of the anode active material is in a range from 0.5 g/cc to 1 g/cc.

9. The anode for a secondary battery according to one of claims 1 to 8, wherein an average particle diameter of the assembly-type artificial graphite particles 50 is larger than an average particle diameter of the single-type artificial graphite particles 60.

10. The anode for a secondary battery according to one of claims 1 to 9, wherein the assembly-type artificial graphite particles 50 are prepared from isotropic coke.

11. The anode for a secondary battery according to one of claims 1 to 10, wherein the single-type artificial graphite particles 60 are prepared from needle coke.

12. A secondary battery, comprising:

the anode 130 for a secondary battery of one of claims 1 to 11; and
a cathode 100 facing the anode.

# FIG. 1

# FIG. 2

FIG. 3

Europäisches
Patentamt

European
Patent Office

Office européen
des brevets

# EUROPEAN SEARCH REPORT

Application Number

EP 23 18 7684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/077370 A1 (CONTEMPORARY AMPEREX TECHNOLOGY CO LTD [CN]) 21 April 2022 (2022-04-21) | 1,2,5-12 | INV. H01M4/133 H01M4/1393 |
| Y | * Description * * table 2 * | 3,4 | H01M4/36 H01M4/583 H01M10/0525 |
| X | EP 3 916 850 A1 (CONTEMPORARY AMPEREX TECHNOLOGY CO LTD [CN]) 1 December 2021 (2021-12-01) * claims 1,4,5,7,16 * | 1,2, 5-10,12 | H01M4/02 |
| Y | WO 2022/010225 A1 (LG ENERGY SOLUTION LTD [KR]) 13 January 2022 (2022-01-13) * claims 1,4 * * Experimental example 7, Comparative example 7, * * table 2 * * Description * | 3,4 | |
| A | KR 2020 0034692 A (POSCO [KR]; RES INST IND SCIENCE & TECH [KR]) 31 March 2020 (2020-03-31) * the whole document * | 10,11 | TECHNICAL FIELDS SEARCHED (IPC) H01M |

The present search report has been drawn up for all claims

| Place of search | Date of completion of the search | Examiner |
|---|---|---|
| Munich | 20 November 2023 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 7684

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2023

| Patent document cited in search report | | Publication date | Patent family member(s) | | Publication date |
|---|---|---|---|---|---|
| WO 2022077370 | A1 | 21-04-2022 | CN | 114747042 A | 12-07-2022 |
| | | | EP | 4138154 A1 | 22-02-2023 |
| | | | JP | 2023515496 A | 13-04-2023 |
| | | | KR | 20220124781 A | 14-09-2022 |
| | | | US | 2023117662 A1 | 20-04-2023 |
| | | | WO | 2022077370 A1 | 21-04-2022 |
| EP 3916850 | A1 | 01-12-2021 | CN | 113207313 A | 03-08-2021 |
| | | | EP | 3916850 A1 | 01-12-2021 |
| | | | JP | 7367201 B2 | 23-10-2023 |
| | | | JP | 2022550793 A | 05-12-2022 |
| | | | KR | 20220064388 A | 18-05-2022 |
| | | | US | 2022123307 A1 | 21-04-2022 |
| | | | WO | 2021108981 A1 | 10-06-2021 |
| WO 2022010225 | A1 | 13-01-2022 | CN | 115336040 A | 11-11-2022 |
| | | | EP | 4109591 A1 | 28-12-2022 |
| | | | JP | 2023518591 A | 02-05-2023 |
| | | | KR | 20220006006 A | 14-01-2022 |
| | | | WO | 2022010225 A1 | 13-01-2022 |
| KR 20200034692 | A | 31-03-2020 | NONE | | |

EPO FORM P0459

For more details about this annex : see Official Journal of the European Patent Office, No. 12/82

**EP 4 312 285 A1**

**REFERENCES CITED IN THE DESCRIPTION**

**Patent documents cited in the description**

- KR 1020220092581